# EUROPEAN PATENT APPLICATION

(11) **EP 2 826 873 A1**
(43) Date of publication of application: **21.01.2015**
(21) Application number: 14166769.1
(22) Date of filing: 01.05.2014
(51) Int. Cl.: C22B 9/18, C22B 9/20

(54) **Joining process, joined article, and process of fabricating a joined article**

(30) Priority: 08.05.2013 US 201313889489
(71) Applicant: General Electric Company, Schenectady, New York 12345 (US)
(72) Inventor: Cui, Yan, Greenville, SC South Carolina 29615-4614 (US); Kottilingam, Srikanth Chandrudu, Simpsonville, SC South Carolina 29681 (US); Lin, Dechao, Greenville, SC South Carolina 29615-4614 (US); Zheng, Jian, Greenville, SC South Carolina 29615-4614 (US); Wood, John R., Greenville, SC South Carolina 29615 (US)
(74) Representative: Bedford, Grant Richard

(57) **Abstract**

Joining process 100, joined article 501, and process of fabricating a joined article 501 are disclosed. The joining process 100 includes providing a consumable electrode 101 comprising a first material 103 and a second material 105, melting the consumable electrode 101 by a current-induced melting or remelting, and re-solidifying the first material 103 and the second material 105 to form a dissimilar ingot 109 having a first region 119 being a re-solidification of the first material 103 and a second region 121 being a re-solidification of the second material 105. The joined article 501 includes the first region and the second region; the dissimilar ingot 109 at least partially defines the joined article. The process of fabricating includes providing the dissimilar ingot 109, positioning the dissimilar ingot 109 within a die, and applying force from the die to compress the dissimilar ingot 109, thereby forming the joined article 501.

## Description

The present invention is directed generally to a joining process and a joined article. More particularly, the present invention is directed to such processes and articles joined by current-induced melting or remelting.

Various systems rely upon more than one material for different portions of components. In general, such components are formed by securing a first material to a second material. The securing technique can be by brazing, soldering, fusing, welding, adhering, mechanically securing, or a combination thereof. Such techniques suffer from various drawbacks. Such techniques have limited material compatibility, can be subject to fatigue, can delaminate, or combinations thereof.

Power generation systems, engines, bridges, buildings, wind turbines, other large structures, and other objects having components with two or more materials are continuously being subjected to greater forces to increase efficiency and/or due to new environmental conditions. Such applications require increased resistance to fatigue, increased temperature resistance (such as, temperature differential resistance), increased operational capabilities, and combinations thereof. Known components having two materials do not sufficiently meet all of the desired parameters.

A joining process, joined article, and process of fabricating a joined article that do not suffer from one or more of the above drawbacks would be desirable in the art.

In an exemplary embodiment, a joining process includes providing a consumable electrode, the consumable electrode comprising a first material and a second material, melting the consumable electrode by a current-induced melting or remelting, and re-solidifying the first material and the second material to form a dissimilar ingot having a first region being a re-solidification of the first material and a second region being a re-solidification of the second material.

In another exemplary embodiment, a joined article includes a first region being a re-solidification of a first material and a second region being a re-solidification of a second material. The first material is re-solidified with the second material as a dissimilar ingot from current-induced melting, the dissimilar ingot at least partially defining the joined article.

In another exemplary embodiment, a process of fabricating a joined article includes providing a dissimilar ingot, positioning the dissimilar ingot within a die, and applying force from the die to compress the dissimilar ingot, thereby forming the joined article. The dissimilar ingot has a first region being a re-solidification of a first material and a second region being a re-solidification of a second material, the first material being re-solidified with the second material as the dissimilar ingot from current-induced melting or remelting.

Various features and advantages of the present invention will be apparent from the following more detailed description of the preferred embodiment, taken in conjunction with the accompanying drawings which illustrate, by way of example, the principles of the invention, and which show:
FIG. 1 is a schematic view of an exemplary joining process according to an embodiment of the disclosure.
FIG. 2 is a schematic view of an exemplary consumable electrode according to an embodiment of the disclosure.
FIG. 3 is a perspective view of an exemplary consumable electrode according to an embodiment of the disclosure.
FIG. 4 is a schematic view of an exemplary process of fabricating a dissimilar ingot into a joined article according to an embodiment of the disclosure.
FIG. 5 is a perspective view of an exemplary joined article fabricated according to an exemplary process according to an embodiment of the disclosure.
FIG. 6 is a schematic view of an exemplary process of fabricating a dissimilar ingot into a joined article according to an embodiment of the disclosure.
FIG. 7 is a perspective view of an exemplary joined article fabricated according to an exemplary process according to an embodiment of the disclosure.
FIG. 8 is a schematic view of an exemplary process of fabricating a dissimilar ingot into a joined article according to an embodiment of the disclosure.
FIG. 9 is a perspective view of an exemplary joined article fabricated according to an exemplary process according to an embodiment of the disclosure.
FIG. 10 is a schematic view of an exemplary process of fabricating an exemplary joined article according to an embodiment of the disclosure.
FIG. 11 is a perspective view of an exemplary joined article being an outer shroud fabricated according to an exemplary process according to an embodiment of the disclosure.
FIG. 12 is a perspective view of an exemplary joined article being a flange fabricated according to an exemplary process according to an embodiment of the disclosure.
FIG. 13 is a perspective view of an exemplary joined article being a retaining ring fabricated according to an exemplary process according to an embodiment of the disclosure.
FIG. 14 is a perspective view of an exemplary joined article being a bearing fabricated according to an exemplary process according to an embodiment of the disclosure.

Wherever possible, the same reference numbers will be used throughout the drawings to represent the same parts.

Provided is an exemplary joining process, joined article, and process of fabricating a joined article. Embodiments of the present disclosure, in comparison to known articles having two materials secured to each other, increase material compatibility, increase fatigue resistance, decrease risk of delamination and/or increase adhesion properties, permit increased efficiency in systems (such as power generation systems or engines), provide greater resistance to temperature variation and/or temperature gradients, lower costs due to reduced or eliminated use of exotic alloys, lower costs due to increased ability to use less expensive alloys in non-critical locations, placing of predetermined properties at predetermined locations by forging, or combinations thereof.

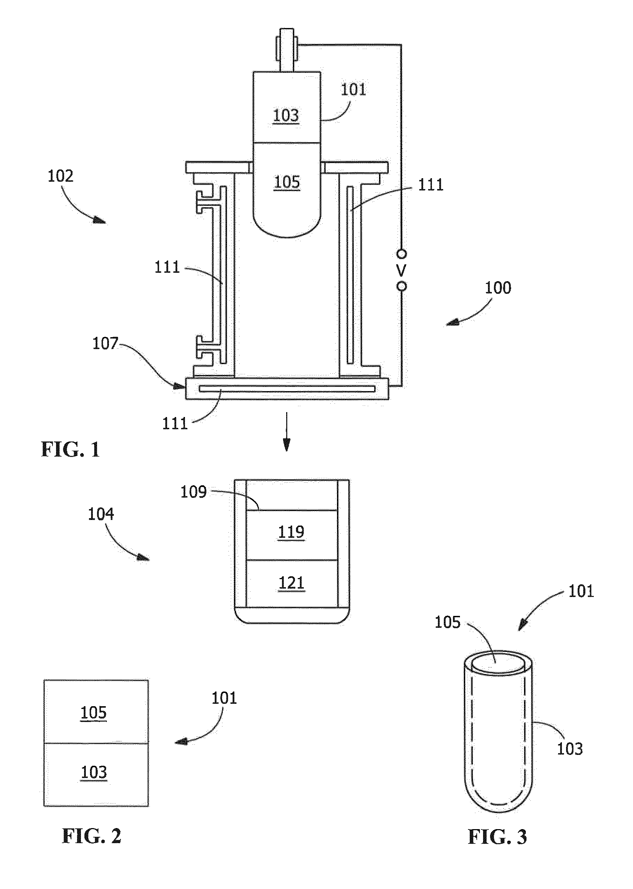

Referring to FIG. 1, in one embodiment, a joining process 100 includes providing a consumable electrode 101. The consumable electrode 101 includes a first material 103 and a second material 105, for example, within the first material 103. The process 100 includes melting or remelting the consumable electrode 101 through a current-induced melting or remelting (step 102) and re-solidifying (step 104) the first material 103 and the second material 105 to form a dissimilar ingot 109 having a first region 119 being a re-solidification of the first material 103 and a second region 121 being a re-solidification of the second material 105.

The melting or remelting (step 102) forms liquid corresponding to the materials in the consumable electrode 101. The liquid settles and liquid re-solidifies (step 104) to form the dissimilar ingot 109. In one embodiment, slag is removed then removed, for example, by grinding of slag.

The consumable electrode 101 includes any suitable materials arranged in any suitable orientation. For example, referring to FIG. 2, in one embodiment, the consumable electrode 101 includes the first material 103 being positioned above or below the second material 105, based upon the term down being in the direction of insertion of the consumable electrode 101, which corresponds generally with the direction of gravity. Referring to FIG. 3, in one embodiment, the first material 103 is positioned around the second material 105 (either in a layered arrangement or a surrounding arrangement). The first material 103 differs from the second material 105 (and/or other present materials) in composition, density, melting point, or a combination thereof. Suitable materials for the first material 103 and/or the second material 105 include, but are not limited to, alloy steel with stainless steel, stainless steel with nickel or cobalt alloys or superalloys, or any other suitable metal or metallic materials.

In one embodiment, as shown in FIG. 1, the current-induced melting or remelting (step 102) is in a mold 107, for example, cooled by water-cooled mechanisms 111 (such as, water inlet(s), water outlet(s), a water-cooled base plate, or combination thereof). The current-induced melting or remelting (step 102) includes applying a current, such as AC current or DC current, to the consumable electrode 101, thereby melting or remelting the consumable electrode 101. Suitable current-induced melting or remelting (step 102) processes include, but are not limited to, electroslag remelting or vacuum arc remelting. The consumable electrode 101 is melted or remelted, for example, by inserting the consumable electrode 101 into the mold 107.

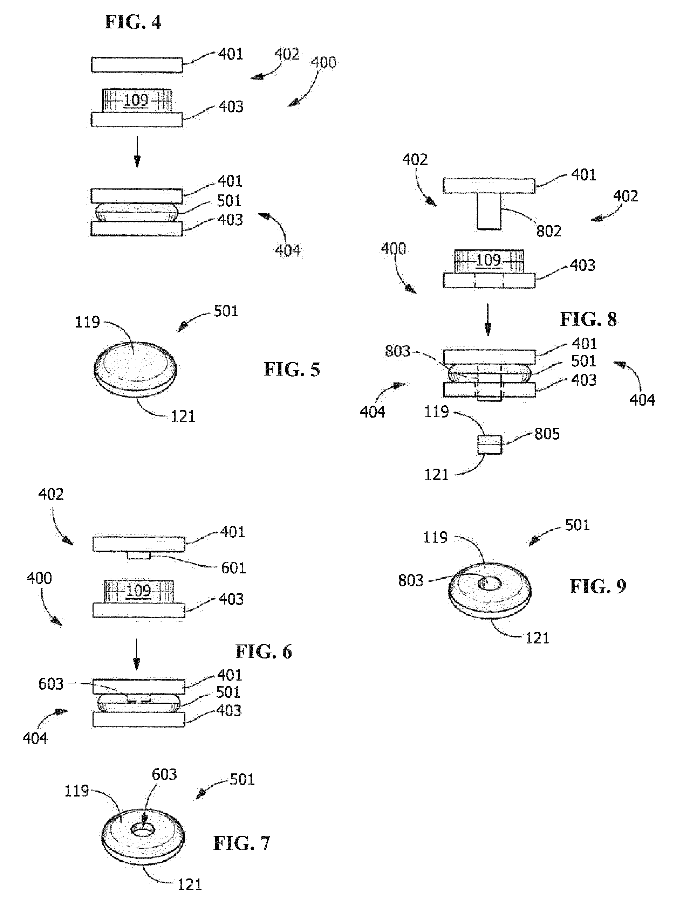

The dissimilar ingot 109 formed from the joining process 100 includes properties suitable for desired applications. For example, in one embodiment, the dissimilar ingot 109 has a fatigue resistance that is greater than the fatigue resistance of the consumable electrode 101, a creep resistance that is greater than that of the consumable electrode 101, a strength that is greater than the consumable electrode 101, heat resistance that is greater than that of the consumable electrode 101, oxidation resistance that is greater than that of the consumable electrode 101, or a combination thereof. Additionally or alternatively, as is shown in FIG. 4, the dissimilar ingot 109 is fabricated (step 400) to form a joined article 501, for example, by positioning the dissimilar ingot 109 within a die having a first surface 401 and a second surface 403 (step 402) and applying force from the die to compress the dissimilar ingot 109 (step 404), thereby forming the joined article 501 shown in FIG. 5. In a further embodiment, referring to FIG. 6, the die includes a protrusion 601 for forming a recess 603, as is shown in the joined article 501 in FIG. 7. In another embodiment, as is shown in FIG. 8, the die includes a punch 802 for forming a through-hole 803, as is shown in the joined article 501 in FIG. 9, and/or a punched article 805, as is shown in FIG. 8.

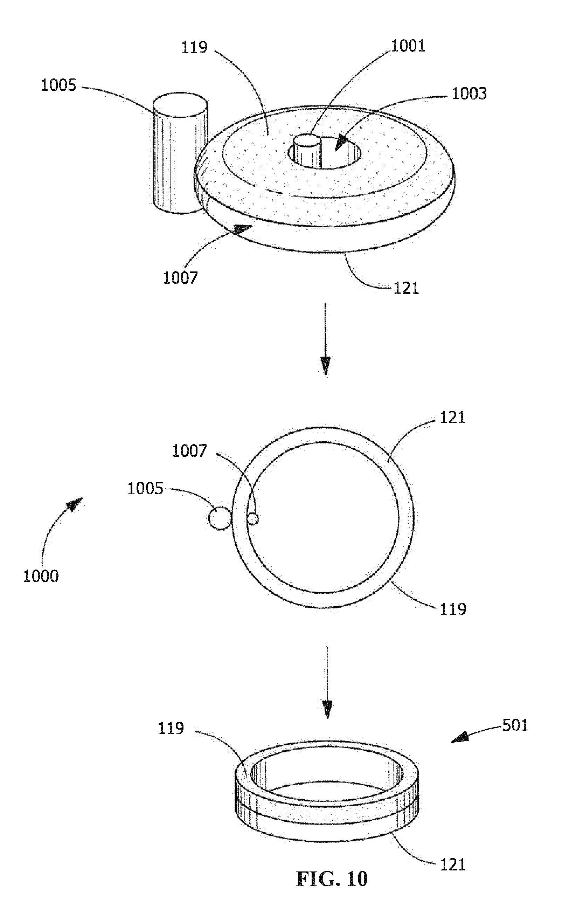

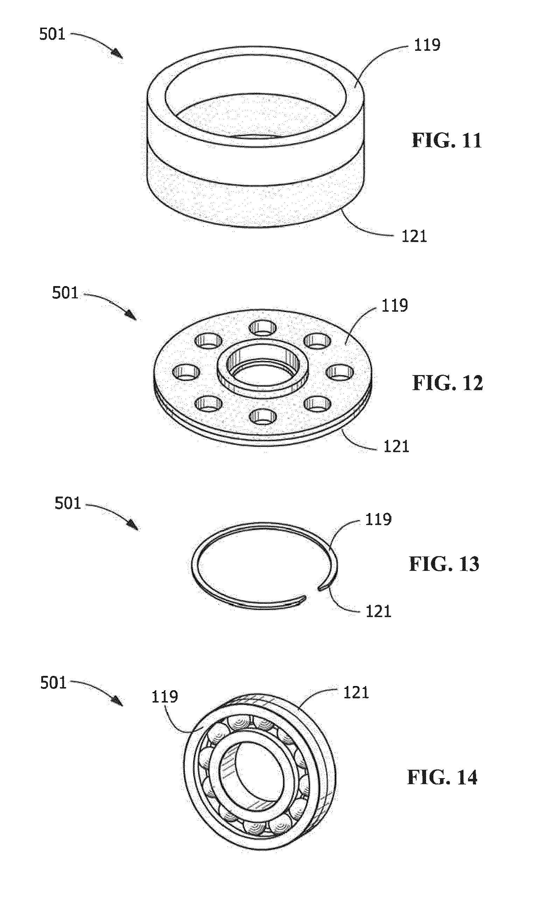

Referring to FIG. 10, in one embodiment, the joining process 100 further includes milling the dissimilar ingot 109 (step 1000), for example, with a mandrel mechanism 1001 arranged and disposed to enlarge and/or modify an inner region 1003 (such as, an inner diameter), with a pressure roll mechanism 1005 arranged and disposed for modifying an outer region 1007 by hot deforming, expanding inner/outer diameters, shaping, otherwise treating, or a combination thereof. The rolling (step 1000) forms an embodiment including the joined article 501. Suitable embodiments of the joined article 501 include, but are not limited to, an outer shroud (see FIG. 11), a flange (see FIG. 12), a retaining ring (see FIG. 13), a bearing (see FIG. 14), other suitable components (such as, a diaphragm, a blade, a vane, a nozzle, an electrical contact, a valve, and/or any suitable turbine component), or a combination thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

Various aspects and embodiments of the present invention are defined by the following numbered clauses:
1. A joining process, comprising:
   providing a consumable electrode, the consumable electrode comprising a first material and a second material;
   melting the consumable electrode by a current-induced melting or remelting; and
   re-solidifying the first material and the second material to form a dissimilar ingot having a first region being a re-solidification of the first material and a second region being a re-solidification of the second material.
2. The joining process of clause 1, wherein the current-induced melting or remelting is electroslag remelting.
3. The joining process of any preceding clause, wherein the current-induced melting or remelting is vacuum arc remelting.
4. The joining process of any preceding clause, wherein the first material has a first melting point and the second material has a second melting point, the first melting point differing from the second melting point.
5. The joining process of any preceding clause, wherein the first material has a first density and the second material has a second density, the first density differing from the second density.
6. The joining process of any preceding clause, further comprising inserting the consumable electrode into a mold prior to the melting of the consumable electrode.
7. The joining process of any preceding clause, wherein the dissimilar ingot has a fatigue resistance that is greater than the fatigue resistance of the consumable electrode.
8. The joining process of any preceding clause, wherein the dissimilar ingot has a creep resistance that is greater than the creep resistance of the consumable electrode.
9. The joining process of any preceding clause, wherein the dissimilar ingot has a strength that is greater than the strength the consumable electrode.
10. The joining process of any preceding clause, wherein the dissimilar ingot has a heat resistance that is greater than the heat resistance of the consumable electrode.
11. The joining process of any preceding clause, wherein the dissimilar ingot has oxidation resistance that is greater than that of the consumable electrode.
12. The joining process of any preceding clause, further comprising positioning the dissimilar ingot within a die and applying force from the die to compress the dissimilar ingot, thereby forming a joined article.
13. The joining process of any preceding clause, further comprising punching a region of the dissimilar ingot or an article formed by the dissimilar ingot.
14. The joining process of any preceding clause, further comprising milling the dissimilar ingot or an article formed by the dissimilar ingot.
15. The joining process of any preceding clause, further comprising forming the dissimilar ingot into at least a portion of an outer shroud, a flange, a retaining ring, a bearing, a diaphragm, a blade, a vane, a nozzle, an electrical contact, a valve, or a combination thereof.
16. The joining process of any preceding clause, further comprising forming the second material of the consumable electrode entirely within the first material prior to the melting of the consumable electrode.
17. A joined article, comprising:
   a first region being a re-solidification of a first material; and
   a second region being a re-solidification of a second material;
   wherein the first material is re-solidified with the second material as a dissimilar ingot from current-induced melting, the dissimilar ingot at least partially defining the joined article.
18. A process of fabricating a joined article, comprising:
   providing a dissimilar ingot, the dissimilar ingot having a first region being a re-solidification of a first material and a second region being a re-solidification of a second material, the first material being re-solidified with the second material as the dissimilar ingot from current-induced melting or remelting;
   positioning the dissimilar ingot within a die; and
   applying force from the die to compress the dissimilar ingot, thereby forming the joined article.
19. The process of any preceding clause, wherein the forming of the joined article includes punching a region of the dissimilar ingot.
20. The process of any preceding clause, wherein the forming of the joined article includes milling the dissimilar ingot.

## Claims

1. A joining process (100), comprising:
providing a consumable electrode (101), the consumable electrode (101) comprising a first material (103) and a second material (105);
melting the consumable electrode (101) by a current-induced melting or remelting; and
re-solidifying the first material (103) and the second material (105) to form a dissimilar ingot (109) having a first region (119) being a re-solidification of the first material (103) and a second region (121) being a re-solidification of the second material (105).

2. The joining process (100) of claim 1, wherein the current-induced melting or remelting is electroslag remelting.

3. The joining process (100) of claim 1, wherein the current-induced melting or remelting is vacuum arc remelting.

4. The joining process (100) of any preceding claim, wherein the first material (103) has a first melting point and the second material has a second melting point (105), the first melting point differing from the second melting point.

5. The joining process (100) of any preceding claim, wherein the first material (103) has a first density and the second material (105) has a second density, the first density differing from the second density.

6. The joining process (100) of any preceding claim, further comprising inserting the consumable electrode (101) into a mold prior to the melting of the consumable electrode (101).

7. The joining process (100) of any preceding claim, wherein the dissimilar ingot (109) has a fatigue resistance that is greater than the fatigue resistance of the consumable electrode (101).

8. The joining process (100) of any preceding claim, wherein the dissimilar ingot (109) has a creep resistance that is greater than the creep resistance of the consumable electrode (101)

9. The joining process (100) of any preceding claim, wherein the dissimilar ingot (109) has a strength that is greater than the strength of the consumable electrode (101).

10. The joining process (100) of any preceding claim, wherein the dissimilar ingot (109) has a heat resistance that is greater than the heat resistance of the consumable electrode (101).

11. The joining process (100) of any preceding claim, wherein the dissimilar ingot (109) has oxidation resistance that is greater than that of the consumable electrode (101).

12. The joining process (100) of any preceding claim, further comprising positioning the dissimilar ingot (109) within a die and applying force from the die to compress the dissimilar ingot, thereby forming a joined article.

13. The joining process (100) of any preceding claim, further comprising punching a region of the dissimilar ingot (109) or an article formed by the dissimilar ingot (109).

14. The joining process (100) of any preceding claim, further comprising milling the dissimilar ingot (109) or an article formed by the dissimilar ingot.

15. The joining process (100) of any preceding claim, further comprising forming the second material (105) of the consumable electrode (101) entirely within the first material prior to the melting of the consumable electrode (101).
